# EUROPEAN PATENT SPECIFICATION

(11) **EP 2 629 061 B1**
(45) Date of publication and mention of the grant of the patent: **17.09.2014**
(21) Application number: 12155456.2
(22) Date of filing: 14.02.2012
(51) Int. Cl.: G01D 5/241, G01B 7/02, G01B 7/30

(54) **Method for operating a capacitive position sensor and capacitive position sensor**
Verfahren zum Betrieb eines kapazitiver Positionssensors und kapazitiver Positionssensor
Procédé de fonctionnement d'un capteur de position capacitive et capteur de position capacitive

(43) Date of publication of application: 21.08.2013
(73) Proprietor: SICK STEGMANN GmbH, 78166 Donaueschingen (DE)
(72) Inventor: Francescon, Massimo, 10132 Torino (IT)
(74) Representative: Patentanwälte Westphal, Mussgnug & Partner

(56) References cited:
- EP-A2- 1 396 703
- WO-A1-2007/043962

## Description

In numerous technical applications, it is important to obtain information on the phase of a moving, for example rotating system at a given point of time, more specifically its linear or angular position at said point of time. To obtain this information, one or more sensors are provided that generate data that are indicative of said position and the data generated by the sensors are evaluated in order to obtain the desired position information. The combination of sensors and hardware for the evaluation represents a device for controlling a moving, specifically a rotating system. Specifically, linear or rotary position encoders belong to this class of devices.

There are well known capacitive position sensors comprising a stator and a rotor, the stator comprising a transmitter and a receiver, the transmitter comprising N sets of conductive elements, each set comprising n conductive elements, the conductive elements of the transmitter formed in a linear or circular arrangement thereon, the receiver comprising a conductive plate formed thereon, the rotor comprising a linear or circumferential modulated geometry, the stator and the rotor being arranged parallel to each other and being rotatable independently, and further comprising a signal generator providing excitation signals driving each conductive elements of the plurality of conductive elements, the excitation signals being periodic in 2π and each set of conductive elements being provided with n different excitation signals, the different excitation signals differing in phase. Usually, the periodic excitation signals are rectangular signals. The capacitive position sensor provides as a result signals that can be written as a sine function and a cosine function, these functions corresponding to a specific position, for a capacitive rotary position sensor corresponding to a specific angle.

A sensor with these features except the use of sine and cosine function for data evaluation is known from EP 1 396 703 A2.

Great part of the fault detection capability is demanded to the so called vector length check, where the sine and cosine outputs are checked for consistency through the relation sin²+cos²=1. A problem of the approach described above is, that a stuck on one output to a certain level has one or two shaft positions where it is not directly detected as the level of the faulty output may be acceptable in these cases. A further problem of the approach described above is, that the fault detection feature becomes poor if the range of accepted vector length must be enlarged, which happens in capacitive encoders because of the axial displacement dependence of the signal strength.

This problem is solved by a method for checking the functionality of a capacitive position sensor with the features of claim 1 and a capacitive position sensor with the features of claim 8.

Advantageous embodiments of the method and the device are obtained by the features of the dependent claims.

A desirable functionality check would be to change the position of the capacitive position encoder, especially in case of a capacitive rotary position encoder to rotate the shaft of the capacitive rotary position encoder. Of course, this kind of check is not practicable because the actual position of the encoder should not be changed for test purposes. Therefore, the basic idea of the invention is not to move the shaft but to move the excitation signal channel assignments to simulate a movement of the capacitive position encoder.

The method according to the invention for operating a capacitive position sensor, the capacitive position sensor comprising a stator and a rotor, the stator comprising a transmitter and a receiver, the transmitter comprising N sets of conductive elements, each set comprising n conductive elements, the conductive elements of the transmitter formed in a linear or circular arrangement thereon, the receiver comprising a conductive plate formed thereon, the rotor comprising a linear or circumferential modulated geometry, the stator and the rotor being arranged parallel to each other and being rotatable independently, comprises the step of providing each conductive element with an excitation signal , the excitation signals being periodic in 2π, each set of conductive elements being provided with n different excitation signals, the different excitation signals differing in phase, wherein in a functionality check mode the excitation signal that in the measurement mode is applied to one of the conductive elements in the functionality check mode is applied to a different one of the conductive elements, the different conductive element being the k-th conductive element counted from the one of the conductive elements, k being an integer of 1 to n-1 and this shift of excitation signals being applied to all conductive elements. During the functionality check mode, the excitation signal channel assignments temporarily are changed, which leads to a simulation of a movement of the capacitive position sensor, especially rotation of the shaft of the capacitive rotary position sensor. Therefore, an effective functionality test can be provided.

According to a preferred embodiment of the invention, each of the conductive elements is divided in x conductive part elements, wherein in the measurement mode the x conductive part elements of each conductive element are driven with an identical excitation signal and wherein in the functionality check mode the excitation signal that in the measurement mode is applied to one of the conductive part elements in the functionality check mode is applied to a different one of the conductive part elements, the different conductive part element being the w-th conductive part element counted from the one of the conductive part elements, w being an integer of 1 to x*n-1 and this shift of excitation signals being applied to all conductive part elements.

Preferably, the functionality check mode comprises at least two evaluation modes, the evaluation modes differ in the value of k or w. Thus a more effective functionality test can be provided.

Preferably, a number of n excitation signals with phases φₙ is used, wherein φⱼ = j*2π/n, j being an integer of 0 to n-1.

In a preferred embodiment of the invention, n is equal to 4. Therefore, the phase shift between the excitation signals is π/2 which corresponds to 90°, which allows simplifying calculations enormously.

Preferably, N is equal to 16 to provide sufficient resolution.

According to a preferred embodiment, x is equal to 2 to allow simplifying calculations.

In an embodiment, the functionality check mode is performed each time the capacitive position sensor is turned on to provide especially automatically information whether the capacitive position sensor is working correctly.

The capacitive position sensor according to the invention comprises at least one stator and one rotor, the stator comprising a transmitter and a receiver, the transmitter comprising N sets of conductive elements, each set comprising n conductive elements, the conductive elements of the transmitter formed in a linear or circular arrangement thereon, the receiver comprising a conductive plate formed thereon, the rotor comprising a linear or circumferential modulated geometry, the stator and the rotor being arranged parallel to each other and being rotatable independently, and further comprises a signal generator providing excitation signals driving each conductive element of the plurality of conductive elements, the excitation signals being periodic in 2π, each set of conductive elements being provided with n different excitation signals, the different excitation signals differing in phase, wherein a functionality check mode the excitation signal that in a measurement mode is applied to one of the conductive elements in the functionality check mode is applied to a different one of the conductive elements, the different conductive element being the k-th conductive element counted from the one of the conductive elements, k being an integer of 1 to n-1 and this shift of excitation signals being applied to all conductive elements.

Preferably, each of the conductive elements is divided in x conductive part elements, wherein in the measurement mode the x conductive part elements of each conductive element are driven with an identical excitation signal and wherein in the functionality check mode the excitation signal that in the measurement mode is applied to one of the conductive part elements in the functionality check mode is applied to a different one of the conductive part elements, the different conductive part element being the w-th conductive part element counted from the one of the conductive part elements, w being an integer of 1 to x*n-1 and this shift of excitation signals being applied to all conductive part elements. Introducing conductive part elements leads to a more effective check of the functionality of the capacitive position sensor, because special faults might not be detected by moving the excitation signals from one conductive element to the next conductive element.

Preferably, the circumferential modulated geometry of the rotor comprises N elements, the angular width of one of the N elements corresponding to the angular width of one set of conductive elements.

According to a preferred embodiment of the invention, the stator comprises a stator plate, the stator plate having formed thereon both the transmitter and the receiver, and in that the rotor os made of a reflective material. In this case, a quite compact two-plate arrangement can be achieved.

According to an alternative preferred embodiment of the invention, the stator comprises a first stator plate, being arranged on a first side of the rotor and comprising the transmitter, and a second stator plate, being arranged on a second side of the rotor, opposite the first side, and comprising the receiver and in that the rotor is made of a dielectric material. In this case, a three-plate arrangement can be achieved having a constant area of the electrodes that is used for evaluation.

Preferably, the capacitive position sensor is a capacitive rotary position sensor.

Next, the invention is explained in more detail using figures of an embodiment of the invention and a figure illustrating the state of the art. In the figures show
- Figure 1: a schematic view of a transmitter of a capacitive rotary position sensor including the arrangement of excitation signals in a measuring mode,
- Figure 2: a schematic view of the transmitter of a capacitive rotary position sensor according to Figure 1 including the arrangement of excitation signals in a functionality check mode,
- Figure 3: a schematic view of a transmitter of a capacitive rotary position sensor comprising conductive part elements including the arrangement of excitation signals in a measuring mode,
- Figure 4: a schematic view of a transmitter of a capacitive rotary position sensor according to Figure 3 including the arrangement of excitation signals in a functionality check mode, and
- Figure 5: a schematic view of a capacitive rotary position sensor comprising a transmitter, a receiver and a dielectric element.

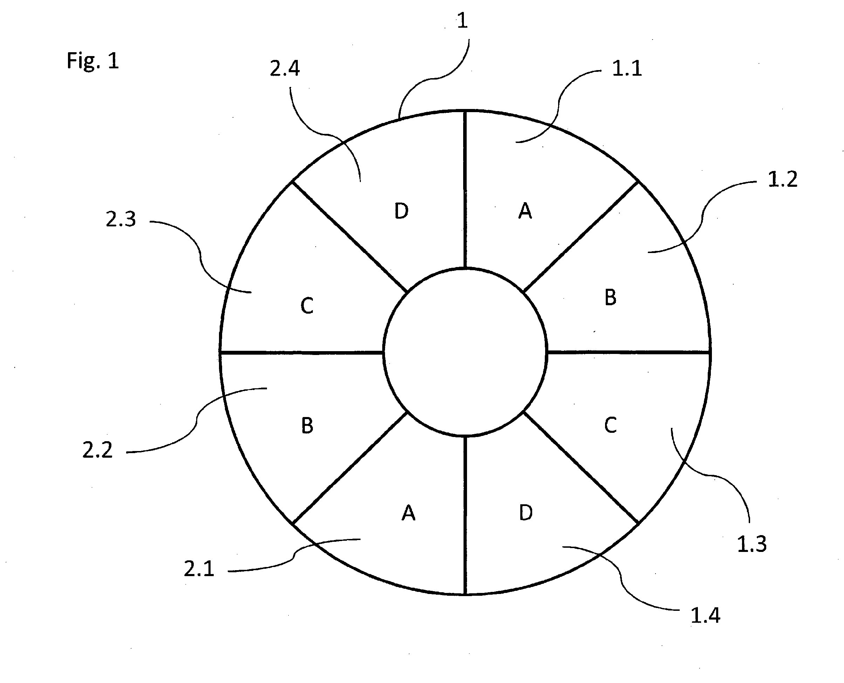

Figure 1 shows a schematic view of a transmitter 1 of a capacitive rotary position sensor including the arrangement of excitation signals. The transmitter comprises a number of N sets of conductive elements 1.1, 1.2, 1.3, 1.4, 2.1, 2.2, 2.3, 2.4, wherein N is equal to 2 for a simplified graphical presentation. Preferably, N is a larger integral number, for example N is equal to 16. Each set of conductive elements comprises n conductive elements, wherein n is equal to 4. Therefore, in the present embodiment, the first set comprises conductive elements 1.1, 1.2, 1.3, 1.4 and the second set comprises conductive elements 2.1, 2.2, 2.3, 2.4. All conductive elements 1.1, 1.2, 1.3, 1.4, 2.1, 2.2, 2.3, 2.4 are arranged in a circular arrangement on the transmitter 1, especially in a symmetrical manner.

Each conductive element 1.1, 1.2, 1.3, 1.4, 2.1, 2.2, 2.3, 2.4 is driven with an excitation signal. The excitation signals are periodic in 2π. The excitations signals are preferably rectangular signals. Each set of conductive elements is provided with n different excitation signals, the different excitation signals differing in phase. Excitation signals of adjacent conductive elements have in the present embodiment a phase shift of 2π/n, in the present case a phase shift of π/2 which corresponds to 90°. In the embodiment of figure 1, four different excitations signals A, B, C, D are used. Excitation signal A has a phase of 0°, excitation signal B has a phase 90°, excitation signal C has a phase of 180° and excitation signal D has a phase of 270°. For each set of conductive elements, for example for the conductive elements 1.1, 1.2, 1.3, 1.4, four different excitation signals A, B, C, D are used. Therefore, each conductive element 1.1, 1.2, 1.3, 1.4 of a single set of conductive elements is driven with a different excitation signal. For example, in a measurement mode the conductive elements 1.1 and 2.1 are driven with excitation signal A, the conductive elements 1.2 and 2.2 are driven with excitation signal B, the conductive elements 1.3 and 2.3 are driven with excitation signal C, and the conductive elements 1.4 and 2.4 are driven with excitation signal D.

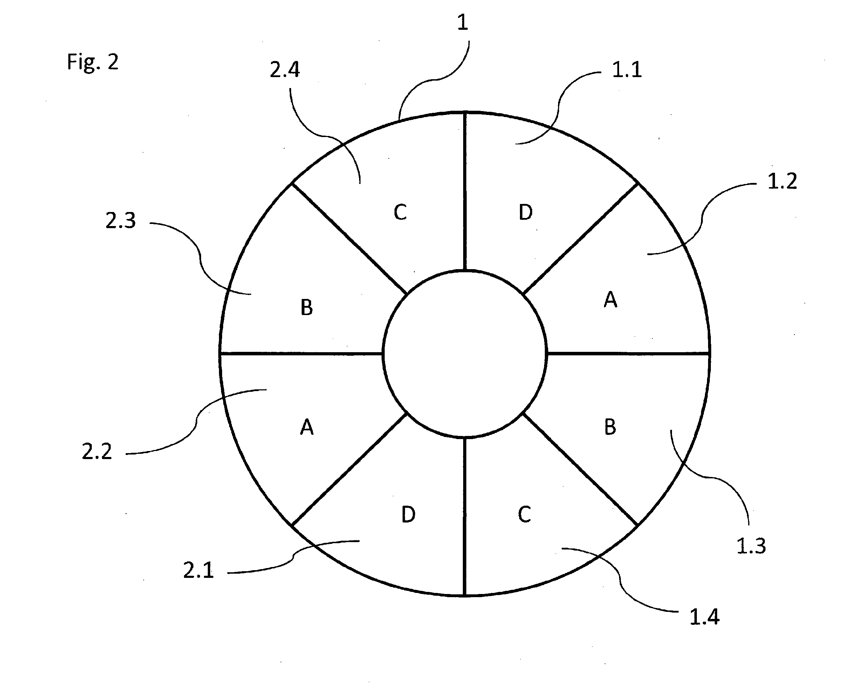

In a functionality check mode, which is shown in figure 2, the excitation signal that in the measurement mode is applied to one of the conductive elements in the functionality check mode is applied to a different one of the conductive elements, the different conductive element being the k-th conductive element counted from the one of the conductive elements, k being an integer of 1 to n-1 and this shift of excitation signals being applied to all conductive elements. Figure 2 shows the functionality check mode for k being equal to 1. In this case, in the functionality check mode the conductive elements 1.1 and 2.1 are driven with excitation signal D, the conductive elements 1.2 and 2.2 are driven with excitation signal A, the conductive elements 1.3 and 2.3 are driven with excitation signal B, and the conductive elements 1.4 and 2.4 are driven with excitation signal C. For a more effective test, a further functionality check mode can be performed using k equal to 2 and/or k equal to 3.

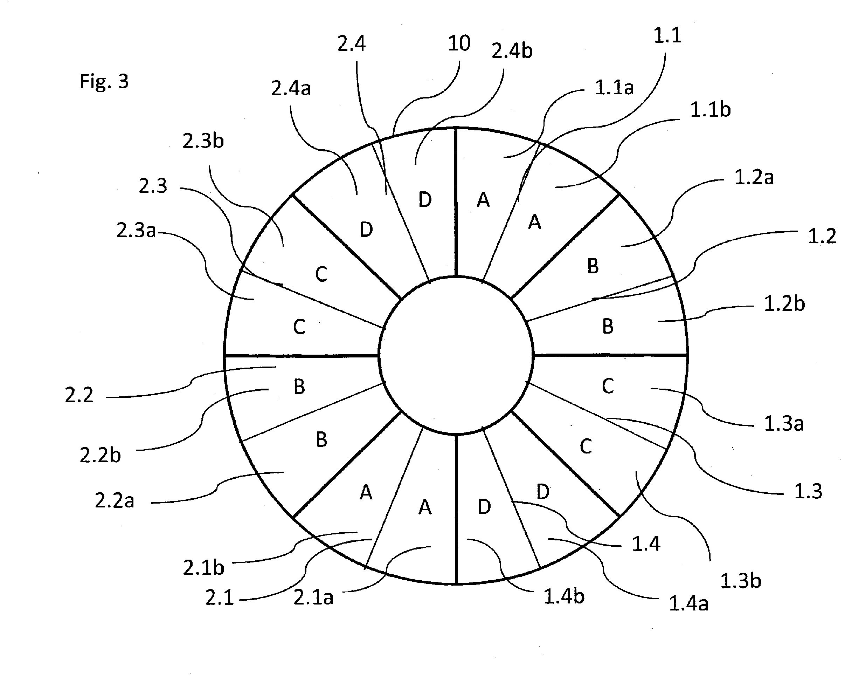

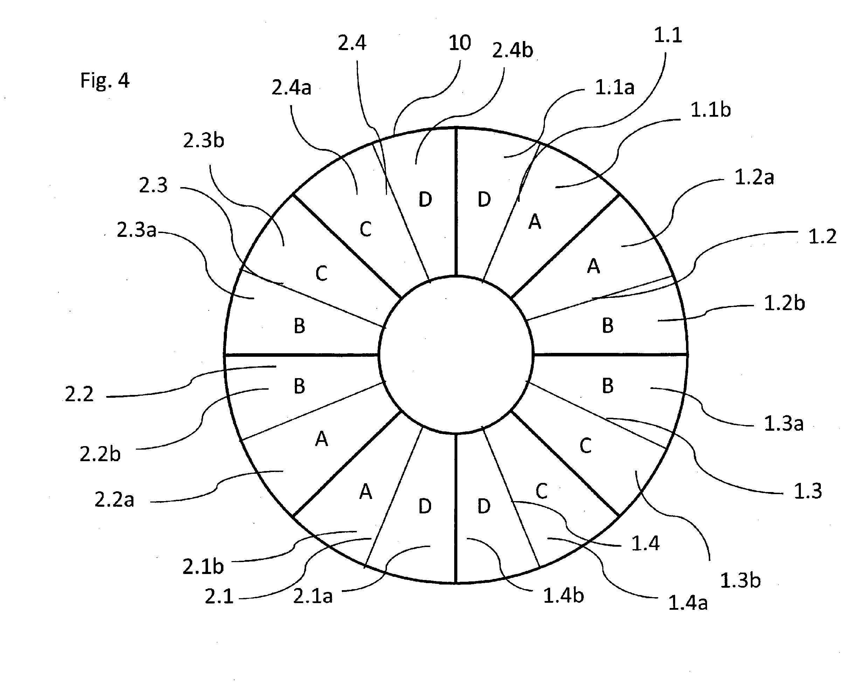

Figures 3 and 4 show an second embodiment of a transmitter 10 according to the invention, in which each conductive element 1.1, 1.2, 1.3, 1.4, 2.1, 2.2, 2.3, 2.4 is divided in x conductive part elements 1.1a, 1.1b, 1.2a, 1.2b, 1.3a, 1.3b, 1.4a, 1.4b, 2.1a, 2.1b, 2.2a, 2.2b, 2.3a, 2.3b, 2.4a, 2.4b, x being equal to 2. Preferably, the conductive part elements 1.1a, 1.1b, 1.2a, 1.2b, 1.3a, 1.3b, 1.4a, 1.4b, 2.1a, 2.1b, 2.2a, 2.2b, 2.3a, 2.3b, 2.4a, 2.4b all are of the same size and are arranged in a circular arrangement on the transmitter 10, especially in a symmetrical manner.

Figure 3 shows the transmitter 10 in a measurement mode, in which the conductive part elements 1.1a, 1.1b, 1.2a, 1.2b, 1.3a, 1.3b, 1.4a, 1.4b, 2.1a, 2.1b, 2.2a, 2.2b, 2.3a, 2.3b, 2.4a, 2.4b which belong to one of the conductive elements 1.1, 1.2, 1.3, 1.4, 2.1, 2.2, 2.3, 2.4 are driven with an identical excitation signal. For example, the conductive part elements 1.2a, 1.2b of the conductive element 1.2 are driven with excitation signal B.

Figure 4 shows the transmitter 10 of figure 3 in a functionality check mode. In the functionality check mode, the excitation signal that in the measurement mode is applied to one of the conductive part elements in the functionality check mode is applied to a different one of the conductive part elements, the different conductive part element being the w-th conductive part element counted from the one of the conductive part elements, w being an integer of 1 to x*n-1 and this shift of excitation signals being applied to all conductive part elements. For example, in figure 3 w is equal to 1. For example, if in the measurement mode the conductive part element 1.1a is driven with excitation signal A, the w-th conductive part element with w being equal to 1 is the conductive part element 1.1b. Therefore, in the functionality check mode with w=1, excitation signal A would be applied to the conductive part element 1.1b. The w-th conductive part element with w being equal to 1 counted from the conductive part element 1.1b is the conductive part element 1.2a. Therefore, in the functionality check mode with w=l, excitation signal A, that was applied to conductive part element 1.1b in the measurement mode would be applied to the conductive part element 1.2a.

This arrangement can especially be achieved by moving the excitations signals on the transmitter 10 for example by one conductive part element, which is to say the excitation signal of the conductive part element 1.1a is applied to the conductive part element 1.1b, the excitation signal of the conductive part element 1.1b is applied to the conductive part element 2.1a, the excitation signal of the conductive part element 2.1a is applied to the conductive part element 2.1b and so on. Alternatively, the excitations signals on the transmitter are not only moved by one conductive part element, but by a number of w conductive part elements, w being an integer from 1 to x*n-1.

For a more effective test, the functionality check mode comprises according to a preferred embodiment at least two evaluation modes, the evaluation modes differ by the value of w. In the present example, the different evaluation modes can be achieved by moving the excitations signals on the transmitter 10 for example by two different numbers w of conductive part elements, for example by w=1 and by w=2 or w=3.

The following table gives an overview of examples of excitation signal assignments to the respective conductive part elements of the transmitter 10 shown in Figures 3 and 4 in the measurement mode and in different functionality check modes:

| Conductive part element | Excitation signal in measurement mode | Excitation signal in functionality check mode w=1 | Excitation signal in functionality check mode w=2 | Excitation signal in functionality check mode w=3 |
|---|---|---|---|---|
| 1.1a | A | D | D | C |
| 1.1b | A | A | D | D |
| 1.2a | B | A | A | D |
| 1.2b | B | B | A | A |
| 1.3a | C | B | B | A |
| 1.3b | C | C | B | B |
| 1.4a | D | C | C | B |
| 1.4b | D | D | C | C |
| 2.1a | A | D | D | C |
| 2.1b | A | A | D | D |
| 2.2a | B | A | A | D |
| 2.2b | B | B | A | A |
| 2.3a | C | B | B | A |
| 2.3b | C | C | B | B |
| 2.4a | D | C | C | B |
| 2.4b | D | D | C | C |

Preferably, the functionality check mode is performed each time the capacitive rotary position encoder is turned on. If the results of the functionality check mode do not correspond to the expected results, an alarm might be set.

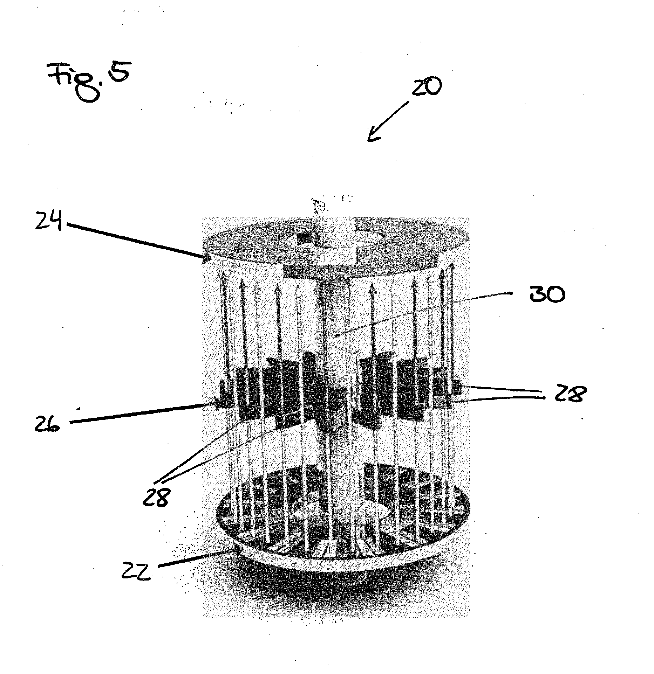

Figure 5 shows a schematic vies of a capacitive rotary position sensor 20 according to the state of the art. The capacitive rotary position sensor 20 comprises a transmitter 22, a receiver 24 and a dielectric element 26. The transmitter 22 is adapted to generate an electrostatic field; the receiver 24 is adapted to receive the electrostatic field. The transmitter 22 comprising N sets of electrical conductive elements, each set comprising n conductive elements. According to the present embodiment n is equal to 4. The conductive elements of the transmitter 22 are arranged in a circular arrangement. In the embodiment according to figure 4, the transmitter 22 comprises two circular arrangements of N sets of conductive elements. An outer circular arrangement of conductive element comprises N = 16 sets of conductive elements, an inner circular arrangement of conductive elements comprises N = 3 sets of conductive elements. Each set of conductive elements comprises four conductive elements. Each conductive element is provided with an excitation signal provided by a signal generator, each set of conductive elements being provided with n different excitation signals, the different excitation signals differing in phase. Especially, each first conductive element of the sets of conductive elements is driven by an identical excitation signal. Likewise, each second, each third and each fourth element of the sets of conductive elements is driven by an identical excitation signal.

The receiver 24 comprises a circular electrical conductive plate formed thereon. The transmitter 22 and the receiver 24 are arranged parallel to each other, wherein the plurality of conductive elements faces the circular conductive plate.

The sensor 20 further comprises a dielectric element 26 with a circumferential modulated geometry. Especially, the dielectric element 26 comprises a circumferential modulated geometry of N elements 28, N for example being equal to 16, the angular width of one of the N elements 28 corresponding to the angular width of one set of conductive elements. The dielectric element 26 is adapted to modulate the electrostatic field between the transmitter 22 and the receiver 24.

The transmitter 22 and the receiver 24 form a stator, the stator comprising a first stator plate comprising the transmitter 22 and a second stator plate comprising the receiver 24.

The dielectric element 26 forms a rotor. The stator and the rotor are arranged parallel to each other and are rotatable independently. The rotor is arranged parallel on a shaft 30. Usually, the stator is fixed in its position and the rotor is rotatable.

### Reference Numbers

- 1: transmitter
- 10: transmitter
- 1.1: conductive element
- 1.1a: conductive element
- 1.1a: conductive element
- 1.2: conductive element
- 1.2a: conductive element
- 1.2b: conductive element
- 1.3: conductive element
- 1.3a: conductive element
- 1.3b: conductive element
- 1.4: conductive element
- 1.4a: conductive element
- 1.4b: conductive element
- 2.1: conductive element
- 2.1a: conductive element
- 2.1b: conductive element
- 2.2: conductive element
- 2.2a: conductive element
- 2.2b: conductive element
- 2.3: conductive element
- 2.3a: conductive element
- 2.3b: conductive element
- 2.4: conductive element
- 2.4a: conductive element
- 2.4b: conductive element

- 20: capacitive rotary position sensor
- 22: transmitter
- 24: receiver
- 26: dielectric element

- 28: element
- 30: shaft

- A: excitation signal
- B: excitation signal
- C: excitation signal
- D: excitation signal

## Claims

1. Method for operating a capacitive position sensor (20), the capacitive position sensor (20) comprising a stator, the stator comprising a transmitter (1, 10, 22) and a receiver (24), the transmitter (1, 10, 22) comprising N sets of conductive elements, each set comprising n conductive elements, the conductive elements of the transmitter (1, 10, 22) formed in a linear or circular arrangement thereon,
the receiver comprising a conductive plate formed thereon,
a rotor, the rotor comprising a linear or circumferential modulated geometry,
the stator and the rotor being arranged parallel to each other and being rotatable independently,
the method comprising the step of providing each conductive element with an excitation signal (A, B, C, D), the excitation signals (A, B, C, D) being periodic in 2π, each set of conductive elements being provided with n different excitation signals (A, B, C, D), the different excitation signals (A, B, C, D) differing in phase,
c h a r a c t e r i z e d i n t h a t in a functionality check mode the excitation signal (A, B, C, D) that in a measurement mode is applied to one of the conductive elements in the functionality check mode is applied to a different one of the conductive elements, the different conductive element being the k-th conductive element counted from the one of the conductive elements, k being an integer of 1 to n-1 and this shift of excitation signals (A, B, C, D) being applied to all conductive elements.

2. Method according to claim 1,
**characterized in that** each of the conductive elements is divided in x conductive part elements, wherein in the measurement mode the x conductive part elements of each conductive element are driven with an identical excitation signal (A, B, C, D) and wherein in the functionality check mode the excitation signal (A, B, C, D) that in the measurement mode is applied to one of the conductive part elements in the functionality check mode is applied to a different one of the conductive part elements, the different conductive part element being the w-th conductive part element counted from the one of the conductive part elements, w being an integer of 1 to x*n-1 and this shift of excitation signals (A, B, C, D) being applied to all conductive part elements.

3. Method according to claim 1 or 2,
**characterized in that** the functionality check mode comprises at least two evaluation modes, the evaluation modes differ in the value of k or w.

4. Method according to one of the preceding claims,
**characterized in that** n is equal to 4.

5. Method according to one of the preceding claims,
**characterized in that** N is equal to 16.

6. Method according to one of the preceding claims,
**characterized in that** x is equal to 2.

7. Method according to one of the preceding claims,
**characterized in that** the functionality check mode is performed each time the capacitive position sensor (20) is turned on.

8. Capacitive position sensor (20) comprising at least one stator, the stator comprising a transmitter (1, 10, 22) and a receiver (24), the transmitter (1, 10, 22) comprising N sets of conductive elements, each set comprising n conductive elements, the conductive elements of the transmitter (1, 10, 22) formed in a linear or circular arrangement thereon,
the receiver (24) comprising a conductive plate formed thereon,
a rotor, the rotor comprising a linear or circumferential modulated geometry,
the stator and the rotor being arranged parallel to each other and being rotatable independently,
and further comprising a signal generator providing excitation signals (A, B, C, D) driving each conductive element of the plurality of conductive elements, the excitation signals (A, B, C, D) being periodic in 2π, each set of conductive elements being provided with n different excitation signals (A, B, C, D), the different excitation signals (A, B, C, D) differing in phase, **characterized in that** in a functionality check mode the excitation signal (A, B, C, D) that in a measurement mode is applied to one of the conductive elements in the functionality check mode is applied to a different one of the conductive elements, the different conductive element being the k-th conductive element counted from the one of the conductive elements, k being an integer of 1 to n-1 and this shift of excitation signals (A, B, C, D) being applied to all conductive elements.

9. Capacitive position sensor (20) according to claim 8, **characterized in that** each of the conductive elements is divided in x conductive part elements, wherein in the measurement mode the x conductive part elements of each conductive element are driven with an identical excitation signal (A, B, C, D) and wherein in the functionality check mode the excitation signal (A, B, C, D) that in the measurement mode is applied to one of the conductive part elements in the functionality check mode is applied to a different one of the conductive part elements, the different conductive part element being the w-th conductive part element counted from the one of the conductive part elements, w being an integer of 1 to x*n-1 and this shift of excitation signals (A, B, C, D) being applied to all conductive part elements.

10. Capacitive position sensor (20) according to one of claims 8 to 9,
**characterized in that** the circumferential modulated geometry of the rotor comprises N elements, the angular width of one of the N elements corresponding to the angular width of one set of conductive elements.

11. Capacitive position sensor (20) according to one of claims 8 to 10,
**characterized in that** the stator comprises a stator plate, the stator plate having formed thereon both the transmitter (1, 10, 22) and the receiver (24), and **in that** the rotor is made of a reflective material.

12. Capacitive position sensor (20) according to one of claims 8 to 10,
**characterized in that** the stator comprises a first stator plate, being arranged on a first side of the rotor and comprising the transmitter (1, 10, 22), and a second stator plate, being arranged on a second side of the rotor, opposite the first side, and comprising the receiver and **in that** the rotor is made of a dielectric material.

13. Capacitive position sensor (20) according to one of claims 8 to 10,
**characterized in that** the capacitive position sensor (20) is a capacitive rotary position sensor.

14. Capacitive position sensor (20) according to one of the claims,
**characterized in that** n is equal to 4 and/or N is equal to 16 and/or x is equal to 2.

## Patentansprüche

1. Verfahren zum Betreiben eines kapazitiven Positionssensor (20), der kapazitive Positionssensor (20), umfassend:
einen Stator, wobei der Stator einen Sender (1, 10, 22) und einen Empfänger (24) umfasst, wobei der Sender (1, 10, 22) N Sätze von leitenden Elementen umfasst, wobei jeder Satz n leitenden Elemente umfasst, die leitenden Elemente des Senders (1, 10, 22) sind in einer linearen oder kreisförmigen Anordnung ausgebildet,
wobei der Empfänger eine leitende Platte umfasst,
einen Rotor, der Rotor weist eine lineare oder
umfangsmäßig modulierte Geometrie auf,
der Stator und der Rotor sind parallel zueinander angeordnet und unabhängig voneinander drehbar,
wobei das Verfahren den Schritt der Bereitstellung eines Anregungssignals (A, B, C, D) für jedes leitende Element umfasst, die Anregungssignale (A, B , C, D) sind periodisch über 2n, wobei jeder Satz von leitenden Elementen mit n verschiedenen Anregungssignale (A, B, C, D) beaufschlagt werden, die verschiedenen in der Phase sind, **dadurch gekennzeichnet, daß** in einem Funktionsprüfung-Modus das Anregungssignal (A, B, C, D), das in einem Messmodus zu einem der leitenden Elemente geführt ist, einem anderen der leitenden Elemente zugeführt wird, das andere leitende Element ist das k-te leitfähige Element von dem einen der leitenden Elemente an gezählt, wobei k eine ganze Zahl von 1 bis n-1 ist und diese Verschiebung der Anregungssignale (A, B, C, D) an alle leitenden Elemente angelegt wird.

2. Verfahren nach Anspruch 1, **dadurch gekennzeichnet, dass** jedes der leitenden Elemente in x leitende Teilelemente unterteilt ist, wobei in dem Messmodus die x leitenden Teilelemente jedes leitenden Elements mit einer identischen Anregungssignal (A, B, C, D) angesteuert werden und wobei in dem Funktionsprüfungs-Modus das Anregungssignal (A, B, C, D), das in dem Messmodus auf eines der leitenden Teilelemente angewendet wird, auf ein anderes der leitenden Teilelemente angewendet wird, wobei dies das w-te leitende Teilelement ist, gezählt von dem einen der leitenden Teilelemente an, wobei w eine ganze Zahl von 1 bis x*n-1 ist, und diese Verschiebung der Anregungssignale (A, B, C, D) an alle leitenden Teilelemente angelegt wird.

3. Verfahren nach Anspruch 1 oder 2, **dadurch gekennzeichnet, dass** der Funktionsprüfungs-Modus mindestens zwei Auswertungsarten umfasst, die Auswertungsarten unterscheiden sich im Wert von k oder w.

4. Verfahren nach einem der vorhergehenden Ansprüche, **dadurch gekennzeichnet, dass** n gleich 4 ist.

5. Verfahren nach einem der vorhergehenden Ansprüche, **dadurch gekennzeichnet, dass** N gleich 16 ist.

6. Verfahren nach einem der vorhergehenden Ansprüche, **dadurch gekennzeichnet, dass** x gleich 2 ist.

7. Verfahren nach einem der vorhergehenden Ansprüche, **dadurch gekennzeichnet, dass** der Funktionsprüfungs-Modus jedes Mal wenn der kapazitive Positionssensor (20) eingeschaltet wird durchgeführt wird.

8. Kapazitive Positionssensor (20) umfassend:
mindestens einen Stator, wobei der Stator einen Sender (1, 10, 22) und einen Empfänger (24) umfasst, wobei der Sender (1, 10, 22) N Sätze von leitenden Elementen umfasst, wobei jeder Satz aus n leitenden Elemente besteht, die leitenden Elemente des Senders (1, 10, 22) in einer linearen oder kreisförmigen Anordnung ausgebildet sind,
der Empfänger (24) eine leitfähige Platte ausgebildet ist,
einen Rotor, wobei der Rotor eine lineare oder umlaufend modulierte Geometrie aufweist,
der Stator und der Rotor sind parallel zueinander angeordnet und unabhängig voneinander drehbar,
und ferner einen Signalgenerator, der Erregungssignale (A, B, C, D) an jedes leitende Element aus der Vielzahl von leitfähigen Elementen giibt, die Anregungssignale (A, B, C, D) sind periodische über 2n, wobei jede Gruppe von leitenden Elementen mit n verschiedenen Anregungssignale (A, B, C, D), die verschiedenen Anregungssignale (A, B, C, D) sind unterschiedliche in ihrer Phase, **dadurch gekennzeichnet, dass** in einem Funktionsprüfungsmodus das Anregungssignal (A, B, C, D),
das in einem Messmodus zu einem der leitenden Elemente geführt wird, auf ein anderes der leitenden Elemente geführt wird, das andere leitende Element ist das k-te leitfähige Element von dem einen der leitenden Elemente an gezählt, wobei k eine ganze Zahl von 1 bis n-1 ist und dieser Shift der Anregungssignale (A, B, C, D) an alle leitenden Elemente angelegt wird.

9. Kapazitiver Positionssensor (20) nach Anspruch 8,
**dadurch gekennzeichnet, dass** jedes der leitenden Elemente in x leitenden Teilelemente aufgeteilt ist, wobei in dem Messmodus die x leitenden Teilelemente jedes leitenden Elements mit einer identischen Anregungssignal (A, B, C, D) angetrieben werden und wobei in dem Funktionsprüfungsmodus das Anregungssignal (A, B, C, D), das in dem Messmodus an eines der leitenden Teilelemente geführt ist, im Funktionsprüfmodus an ein anderes leitfähiges Teilelemente geführt ist, das andere leitfähigen Teilelement ist das w-te Teilelement von dem einen der leitenden Teilelemente gezählt, wobei w eine ganze Zahl von 1 bis x * n-1 ist und diese Verschiebung der Anregungssignale (A, B, C, D) auf alle leitenden Teilelemente aufgebracht ist.

10. Kapazitive Positionssensor (20) nach einem der Ansprüche 8 bis 9, **dadurch gekennzeichnet, dass** die umfangsmodulierte Geometrie des Rotors N Elemente aufweist, die Winkelbreite eines der N Elemente entspricht der Winkelbreite eines Satzes der leitenden Elemente.

11. Kapazitive Positionssensor (20) nach einem der Ansprüche 8 bis 10, **dadurch gekennzeichnet, dass** der Stator eine Statorplatte aufweist, auf der Statorplatte sowohl der Sender (1, 10, 22) und der Empfänger (24) aufgebracht sind, und dass der Rotor aus einem reflektierenden Material hergestellt ist.

12. Kapazitive Positionssensor (20) nach einem der Ansprüche 8 bis 10, **dadurch gekennzeichnet, daß** der Stator eine erste Statorplatte aufweist, die auf einer ersten Seite des Rotors angeordnet ist und den Sender (1, 10, 22) aufweist und ein zweite Statorplatte, die auf einer zweiten Seite des Rotors angeordnet ist, gegenüber der ersten Seite, und den Empfänger umfasst, und dass der Rotor aus einem dielektrischen Material hergestellt ist.

13. Kapazitiver Positionssensor (20) nach einem der Ansprüche 8 bis 10, **dadurch gekennzeichnet, dass** der kapazitive Positionssensor (20) ein kapazitiver Drehwinkelsensor ist.

14. Kapazitiver Positionssensor (20) nach einem der Ansprüche, **dadurch gekennzeichnet, daß** n gleich 4 ist und/oder N gleich 16 und/oder x gleich 2 ist.

## Revendications

1. Procédé pour faire fonctionner un capteur de position capacitif (20), le capteur de position capacitif (20) comprenant un stator, le stator comprenant un émetteur (1, 10, 22) et un récepteur (24), l'émetteur (1, 10, 22) comportant N ensembles d'éléments conducteurs, chaque ensemble comprenant n éléments conducteurs, les éléments conducteurs de l'émetteur (1, 10, 22) formée dans un arrangement linéaire ou circulaire sur celle-ci, le récepteur comprenant une plaque conductrice formée sur celui-ci, un rotor, l'comprenant un rotor, linéaire ou circonférentielle
géométrie modulée, le stator et le rotor étant disposés parallèlement les uns aux autres et pouvant tourner de façon indépendante, le procédé comprenant l'étape consistant à fournir chaque élément conducteur par un signal d'excitation (A, B, C, D), les signaux d'excitation (A, B , C, D) étant périodique dans 2n, chaque ensemble d'éléments conducteurs étant pourvu de n différents signaux d'excitation (A, B, C, D), les différents signaux d'excitation (A, B, C, D) de phases différentes, **caractérisé en ce que** dans un mode de contrôle de fonctionnement du signal d'excitation (A, B, C, D) que dans un mode de mesure est appliqué à l'un des éléments conducteurs dans le mode de vérification de la fonctionnalité est appliquée à un, différent, des éléments conducteurs, l'autre élément conducteur étant l'élément conducteur k-ième comptée à partir de l'un des éléments conducteurs, k étant un nombre entier de 1 à n-1, et ce changement de signaux d'excitation (A, B, C, D) étant appliqué à l'ensemble des éléments conducteurs.

2. Procédé selon la revendication 1, **caractérisé en ce que** chacun des éléments conducteurs est divisé en x éléments de pièces conductrices, dans lequel, dans le mode de mesure des éléments partiels x conductrices de chaque élément conducteur sont commandés avec un signal d'excitation identiques (A, B, C , D) et dans lequel, dans le mode de vérification de la fonctionnalité du signal d'excitation (A, B, C, D) que dans le mode de mesure est appliqué à l'un des éléments de pièces conductrices dans le mode de vérification de la fonctionnalité est appliqué à l'une différente de la conductrice éléments partiels, les différents éléments de la partie conductrice étant l'élément de la pièce conductrice w-ième comptée à partir de l'un des éléments de pièces conductrices, w étant un nombre entier de 1 à x * n-1, et ce changement de signaux d'excitation (A, B, C, D) étant appliqué à tous les éléments de pièces conductrices.

3. Procédé selon la revendication 1 ou 2, **caractérisé en ce que** le mode de vérification de la fonctionnalité comprend au moins deux modes d'évaluation, les modes d'évaluation diffère de la valeur de k ou p.

4. Procédé selon l'une des revendications précédentes, **caractérisé en ce que** n est égal à 4.

5. Procédé selon l'une des revendications précédentes, **caractérisé en ce que** N est égal à 16.

6. Procédé selon l'une des revendications précédentes, **caractérisé en ce que** x est égal à 2.

7. Procédé selon l'une des revendications précédentes, **caractérisé en ce que** le mode de vérification de la fonctionnalité est réalisée chaque fois que le capteur de position capacitif (20) est sous tension.

8. Capteur de position capacitif (20) comprenant au moins un stator, le stator comprenant un émetteur (1, 10, 22) et un récepteur (24), l'émetteur (1, 10, 22) comprenant des N ensembles d'éléments conducteurs, chaque ensemble comprenant n éléments conducteurs, les éléments conducteurs de l'émetteur (1, 10, 22) formées dans une disposition circulaire sur celle-ci, linéaire ou, le récepteur (24) comprenant une plaque conductrice formée sur celui-ci, un rotor, le rotor comprenant un alkyle linéaire ou circonférentielle modulée la géométrie, le stator et le rotor étant disposés parallèlement les uns aux autres et pouvant tourner indépendamment, et comprenant en outre un générateur de signaux fournissant des signaux d'excitation (a, B, C, D) d'entraînement de chaque élément conducteur de la pluralité d'éléments conducteurs, les signaux d'excitation (A, B, C, D) étant périodique dans 2n, chaque ensemble d'éléments conducteurs étant pourvu de n différents signaux d'excitation (A, B, C, D), les différents signaux d'excitation (A, B, C, D) différentes en phase, **caractérisé en ce que** dans un mode de contrôle de fonctionnement du signal d'excitation (A, B, C, D) que dans un mode de mesure est appliqué à un conducteur de l'éléments dans le mode de vérification de la fonctionnalité est appliquée à un, différent, des éléments conducteurs, l'autre élément conducteur étant l'élément conducteur k-ième comptée à partir de l'un des éléments conducteurs, k étant un nombre entier de 1 à n-1, et ce changement des signaux d'excitation (A, B, C, D) étant appliqué à l'ensemble des éléments conducteurs.

9. Capteur de position capacitif (20) selon la revendication 8, **caractérisé en ce que** chacun des éléments conducteurs est divisé en x éléments partiels conducteurs, dans lequel, dans le mode de mesure des éléments x de partie conductrice de chaque élément conducteur sont commandés avec un signal d'excitation identiques (A, B, C, D) et dans lequel, dans le mode de vérification de la fonctionnalité du signal d'excitation (A, B, C, D) que dans le mode de mesure est appliqué à l'un des éléments de pièces conductrices dans le mode de vérification de la fonctionnalité est appliqué à un, différent, des éléments de pièces conductrices, l'autre élément de la pièce conductrice étant le w-ième Elément de partie conductrice prise en compte de celle des éléments de pièces conductrices, w étant un nombre entier de 1 à x * n-1 et ce décalage de signaux d'excitation (A, B, C, D) étant appliqué à tous les éléments de pièces conductrices.

10. capteur de position capacitif (20) selon l'une des revendications 8 à 9, **caractérisé en ce que** la géométrie modulée circonférentielle du rotor comporte N éléments, la largeur angulaire de l'un des N éléments correspondant à la largeur angulaire d'un ensemble d'éléments conducteurs.

11. capteur de position capacitif (20) selon l'une quelconque des revendications 8 à 10, **caractérisé en ce que** le stator comprend une plaque de stator, la plaque de stator sur lequel est formée à la fois l'émetteur (1, 10, 22) et le récepteur (24), et **en ce que** le rotor est réalisé en un matériau réfléchissant.

12. capteur de position capacitif (20) selon l'une des
revendications 8 à 10, **caractérisé en ce que** le stator comprend une première plaque de stator, est disposé sur un premier côté du rotor et comprenant l'émetteur (1, 10, 22), et un la deuxième plaque de stator, est disposé sur un second côté du rotor, opposé au premier côté. et comprenant le récepteur et **en ce que** le rotor est constitué d'un matériau diélectrique.

13. Capteur de position capacitif (20) selon l'une des revendications 8 à 10, **caractérisé en ce que** le capteur de position capacitif (20) est un capteur capacitif de position de rotation.

14. Capteur de position capacitif (20) selon l'une
quelconque des revendications, **caractérisé en ce que** n est égal à 4 et / ou N est égal à 16 et / ou x est égal à 2.
